# EUROPEAN PATENT SPECIFICATION

(11) **EP 2 428 412 B1**
(45) Date of publication and mention of the grant of the patent: **14.05.2014**
(21) Application number: 10176703.6
(22) Date of filing: 14.09.2010
(51) Int. Cl.: B60R 21/36

(54) **A Pedestrian Air-Bag**
Fußgänger-Airbag
Air-bag pour piétons

(43) Date of publication of application: 14.03.2012
(73) Proprietor: Autoliv Development AB, 447 83 Vårgårda (SE)
(72) Inventor: Pucher, Florian, 85445 Aufkirchen (DE); Zauritz, Ralph, 83607 Holzkirchen (DE)
(74) Representative: Beattie, Alex Thomas Stewart

(56) References cited:
- EP-A1- 1 479 574
- DE-A1- 10 059 223
- DE-A1- 10 062 560
- JP-A- 2003 320 920

## Description

THIS INVENTION relates to a pedestrian air-bag, and in particular concerns an air-bag for preventing or minimising injury to a pedestrian who is struck substantially head-on by a motor vehicle.

It has previously been proposed to provide a passenger protection air-bag that, when it is determined by the vehicle's crash sensors that a substantially head-on collision with the pedestrian is occurring or is imminent, is inflated to cover at least part of the vehicle's windscreen and also the A-pillars that are located to either side of the windscreen. The aim is to cushion the pedestrian's impact with windscreen and/or the A-pillars.

When designing air-bags of this type there is a trade-off between the thickness of the air-bag when in an inflated state and the total internal volume of the air-bag. It is generally desirable for the air-bag to be as thick as possible, to provide the largest possible cushioning effect for a pedestrian. It is also desirable to minimise the total internal volume of the air-bag, so that the air-bag may be filled more quickly, and requires the minimum amount of gas to fill the bag, which in turn minimises the cost and weight of the air-bag unit.

An airbag according to the preamble of claim 1 is disclosed by DE 100 62 560 A.

It is an object of the present invention to seek to provide a pedestrian air-bag that provides adequate protection for a pedestrian whilst having a minimum total internal volume.

Accordingly, one aspect of the present invention provides an air-bag mounted at a location near the front edge of a vehicle windscreen, the air-bag comprising: an inflatable perimeter chamber which extends at least part of the way around a central region; a plurality of substantially parallel secondary chambers provided substantially within the central region; wherein a central plane of the perimeter chamber, which passes through the centre of the depth of the perimeter chamber, is offset from a central plane of the at least one secondary chamber, which passes generally through the centre of the depth of the at least one secondary chamber, the air-bag, when inflated, is positioned so that the perimeter chamber is arranged around the windscreen so it overlies the hard structural elements around the windscreen and the secondary chambers overlie the main central portion of the windscreen oriented such that the central plane of the secondary chambers is on the outer side of the air-bag, spaced away from the windscreen.

Advantageously, the perimeter chamber extends substantially all of the way around the central region.

Preferably, the perimeter chamber extends only part of the way around the central region,

Conveniently, the perimeter chamber has two free ends, and a flexible retaining element is attached to, and extends between, the two free ends.

Advantageously, at least one secondary chamber is formed substantially parallel with the flexible retaining element, and the length of the at least one secondary chamber, when inflated, is greater than that of the flexible retaining element so that the at least one secondary chamber adopts a bowed configuration when the air-bag is inflated.

Advantageously, at least part of the central region is unobstructed when the air-bag is inflated.

Preferably, the distance between the central plane of the perimeter chamber and the central plane of the at least one secondary chamber is at least half of the depth of the secondary chamber.

Conveniently, the offset is at least as great as the depth of the secondary chamber.

Advantageously, the offset is at least twice as great as the depth of the secondary chamber.

Preferably, the depth of the perimeter chamber is greater than the depth of the at least one second chamber.

Conveniently, the depth of the perimeter chamber is at least twice as great as the depth of the secondary chamber.

Advantageously, the offset is at least as great as half the depth of the perimeter chamber

Preferably, the air-bag is a pedestrian air-bag.

Another aspect of the present invention provides a vehicle comprising an air-bag according to the above.

In order that the present invention may be more readily understood, embodiments thereof will now be described, by way of example, with reference to the accompanying drawings, in which:
figure 1 shows panels used to produce an air-bag embodying the present invention;
figures 2 to 4 show a first air-bag embodying the present invention;
figures 5 and 6 show a second air-bag embodying not forming part of the present invention; and
figure 7 shows a third air-bag embodying the present invention.

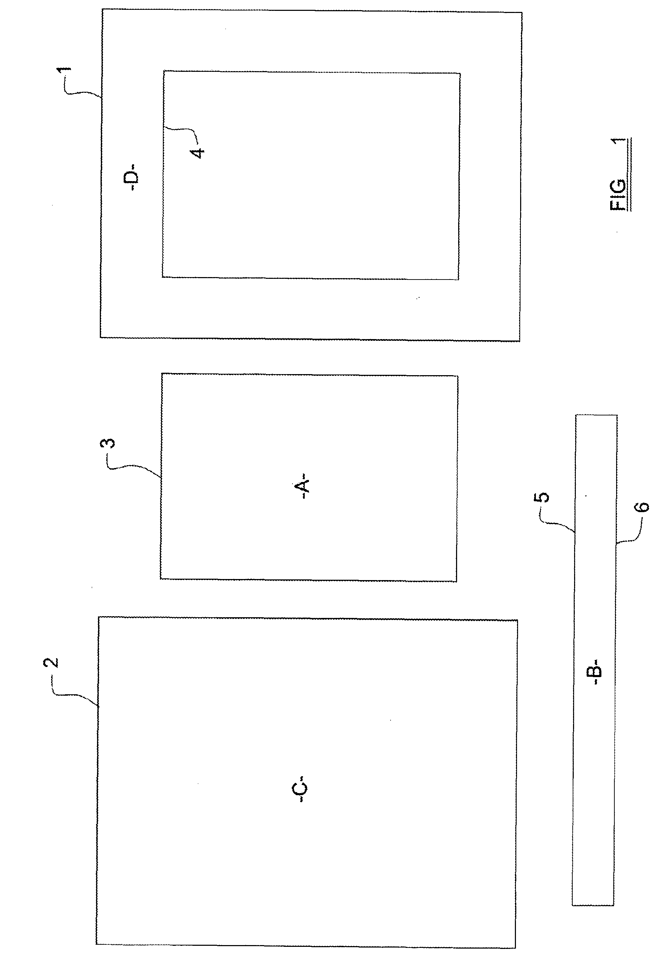

A first embodiment of the invention will now be described with reference to figures 1 to 4.

Turning firstly to figure 1, the panels used to manufacture the air-bag are shown.

A base panel C is generally rectangular in shape. A border panel D takes the form of a rectangular frame, whose outer perimeter 1 is substantially the same shape and size of the outer perimeter 2 of the base panel C.

A top panel A is also generally rectangular, having an outer perimeter 3 which is substantially the same shape and size as the inner perimeter 4 of the border panel D.

Finally, a connection panel B is of a generally long, thin rectangular shape.

The relative sizes of the panels A, B, C and D are shown only schematically in figure 1.

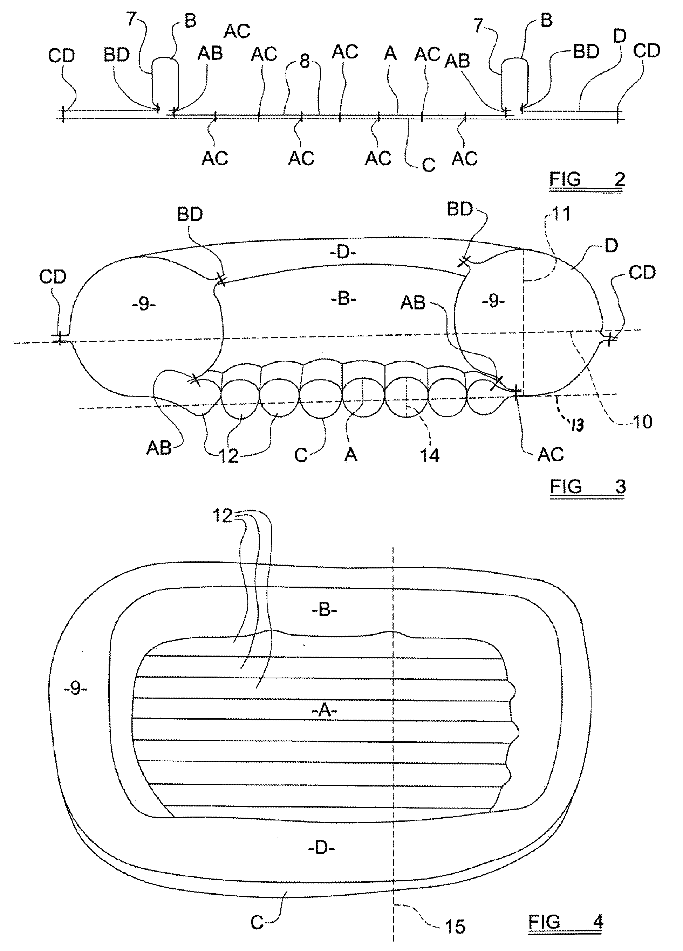

Figure 2 shows how the panels A, B, C, D are joined together to form the air-bag. Figure 2 is a cross-sectional view, taken along a line generally bisecting the finished air-bag in an uninflated state, passing through the centres of the long sides of the base panel C.

The base panel C is laid flat, and the border panel D is laid over the base panel C so that the outer perimeters 1,2 of the panels CD are substantially aligned with one another. The outer perimeters 1,2 are sewn or otherwise joined together by seams CD.

The top panel A is then placed on top of the base panel C, within the inner perimeter of the border panel D. The top panel A is not connected directly to the border panel D, however.

The connection panel B is arranged around the rectangular region where the outer perimeter 3 of the top panel A meets the inner perimeter 4 of the border panel D. One edge 5 of the connection panel B is sewn to the inner perimeter 4 of the border panel D at seams BD, and the opposite edge 6 of the connection panel B is sewn to the outer perimeter 3 of the top panel A at seams AB. It will be understood that the outer perimeter 3 of the top panel A and the inner perimeter 4 of the border panel D lie very close to one another, and the connection panel B will therefore form a loose fold or bulge 7 of excess material running around the region where the top panel A meets the border panel B.

A number of elongate, generally parallel seams AC are formed to connect the base panel C and top panel A to one another, to form parallel chambers 8 between the seams AC. In preferred embodiments, the seams AC are not continuous, so that the parallel chambers 8 are in fluid communication with one another.

Finally, along one side, the top panel A is connected to the base panel C at the edge of the top panel A, by a seam AC. This seam AC is therefore directly below the loose fold or bulge 7 formed by the connection panel B along this edge.

A gas inlet port (not shown) is provided, so that gas may be introduced into the interior of the air-bag from an inflator (not shown). In preferred embodiments, the gas inlet port is located in the border panel D, at the junction between the border panel D and the base panel C, or in the region of the base panel C that overlaps with the border panel D.

Figure 3 shows the air-bag of figure 2 in an inflated state, when pressurised gas has been introduced into the air-bag. The connection panel B, the border panel D and the region of the base panel C that overlaps the border panel D form an inflated ring-like perimeter chamber 9 that extends all of the way around the top panel A, enclosing a central region. A central plane 10 of the perimeter chamber 9 is defined as passing approximately through the middle of the depth 11 of the perimeter chamber 9.

The parallel seams AC that are formed between the base panel C and the top panel A form a series of parallel, generally tubular secondary chambers 12 which are located generally within the perimeter chamber 9. A central plane 13 of the secondary chambers 12 is defined as passing generally through the centre of the depth 14 of the secondary chambers 12.

As can be seem from figure 3, the fact that the top panel A is not connected to the base panel C along one side (in figure 3, the left-hand side) allows gas to flow from the perimeter chamber 9 into a first one of the secondary chambers 12, and subsequently into the remainder of the secondary chambers 12.

Figure 4 shows a perspective view of the air-bag when inflated. A line 15 in figure 4 shows generally where the cross-sectional views of figure 2 and 3 are taken.

When inflated, the air-bag generally takes a form similar to that of a rubber dinghy.

In use, the air-bag will be mounted at a location near the front edge of the vehicle's windscreen, for instance under the cowl portion. When it appears that a head-on collision with a pedestrian is imminent, or is occurring, the air-bag is inflated so that the perimeter chamber 9 is arranged around the windscreen, so that it overlies the hard structural elements around the windscreen, i.e. the chassis immediately in front of the front edge of the windscreen, the A-pillars and the front of the vehicle's roof.

When the air-bag is inflated, the central plane 10 of the perimeter chamber 9 is spaced apart and offset from the central plane 13 of the secondary chambers 12. In preferred embodiments of the invention, the distance of the offset is at least half of the depth of one of the secondary chambers. In other embodiments, the offset is at least as great as the depth of one of the secondary chambers. In still further embodiments, the offset is at least twice as great as the depth of one of the secondary chambers. In other embodiments, the offset is at least as great as half of the depth of the perimeter chamber.

The secondary chambers 12 will overlie the main, central portion of the windscreen. The air-bag will be oriented so that the central plane 13 of the secondary chambers 12 is on the outer side of the air-bag, spaced away from the windscreen.

It has been found that this arrangement provides a good level of protection for pedestrians, whilst only requiring a relatively small internal volume for the air-bag. It has been found that a pedestrian requires less protection if the pedestrian strikes a central portion of the windscreen, as the windscreen will break and deform, thus cushioning the pedestrian's impact. The pedestrian requires more protection, however, if striking the hard structural elements that surround the windscreen, as these will deform to a much lesser extent and thus will provide little or no cushioning for the pedestrian's impact.

The presence of the secondary chambers 12 also helps maintain the shape of the perimeter chamber 9 during deployment and use. Without these secondary chambers 12 there is a significant risk that the perimeter chamber 9 would become deformed and/or move out of position.

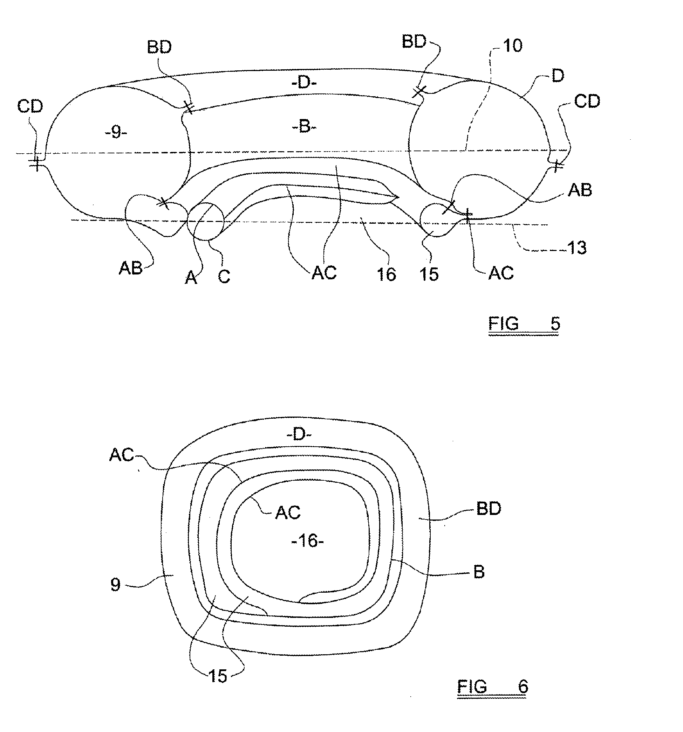

Turning to figures 5 and 6, a second embodiment not forming part of the invention is shown. The air-bag of this embodiment is formed in a similar way to the air-bag shown in figures 1 to 4, but is formed with a spiral-shaped secondary chamber 15, which is coiled around the inner edge of the perimeter chamber 9 and leaves a central viewing window 16 in the middle of the air-bag. It will be understood that this can be achieved, for example, by creating a spiral seam AC between the base panel C and the top panel A, and by cutting away central portions of the base panel C and top panel A, or by using base and top panels C,A with apertures pre-formed in them.

Once again, the central plane 10 of the perimeter chamber 9 is offset and spaced apart from the central plane 13 of the secondary chamber 15.

It will be understood that this embodiment functions in a similar manner to the embodiments described in figures 1 to 4. However, the formation of a spiral secondary chamber 15 makes the creation of the central window 16 more practical. It will be understood that the provision of a central window 16 of this type will help to enable the driver of the vehicle to see the road ahead of the vehicle following activation of the air-bag. This will be advantageous in helping the driver to avoid other obstacles and/or hazards before the vehicle has come to a complete stop.

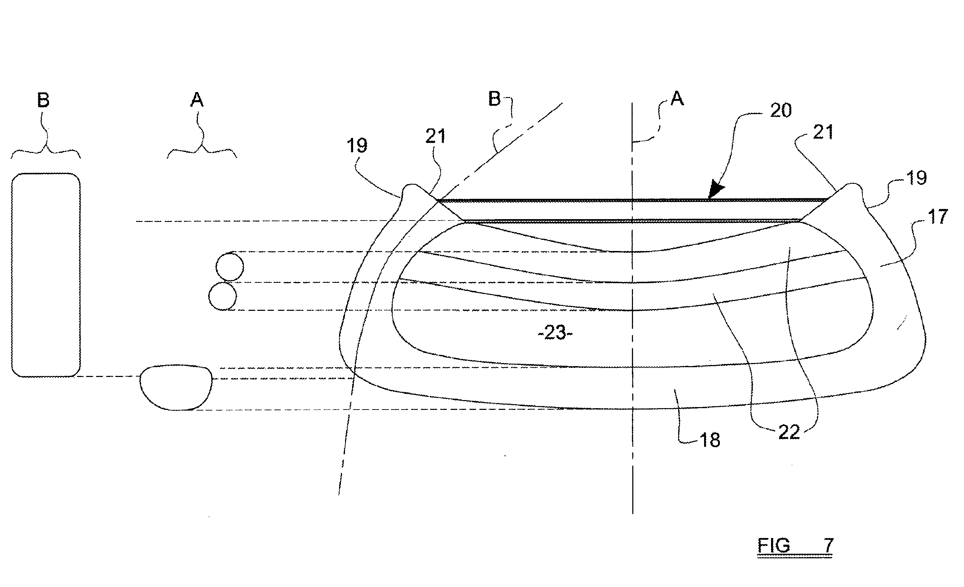

Turning to figure 7, a third embodiment of the invention is shown. In this embodiment, the perimeter chamber 17 is generally U-shaped, having a lower section 18 which is intended to overlie the cowl region of the vehicle when deployed, and respective side portions 19 which are intended to cover the A-pillars of the vehicle when the air-bag is deployed. A strap 20 extends between the free ends 21 of the side portions 19, and is intended to lie across the top edge of the windscreen.

A pair of secondary chambers 22 extend between the side portions 19, and a central window 23 is provided between the lower portion 18 and the secondary chambers 22.

Once again, the central plane of the perimeter chamber 17 is offset and spaced apart from the central plane of the secondary chambers 22.

It will be understood that, in the third embodiment, the strap 20 and the secondary chambers 22 will help to maintain the shape and position of the perimeter chamber 17 during inflation and use of the air-bag.

To the right of figure 7, the air-bag is shown, with lines A,B passing through the chambers 17,19. To the left of figure 7, the cross-sections at A and B are shown.

In preferred embodiments, the secondary chambers are "domed" and extend outwardly from the central region of the windscreen. This can be arranged by making the length of the secondary chambers 22 greater than the length of the strap 20, so that the secondary chambers 22 are unable to adopt a straight configuration when fully inflated.

In general, if one or more of the secondary chambers is domed or bowed, so that not all of the chamber lies on a common plane, then preferably the central plane of the secondary chambers is taken to be the plane passing through the centre of the depth of the secondary chamber at a location where the secondary chamber is generally parallel with the plane of the perimeter chamber. Alternatively, the central plane of the secondary chambers may be taken to be the plane passing through the centre of the depth of the secondary chamber at a location where the secondary chamber meets, or lies closest to, the perimeter chamber.

Once again, the central window 23 will allow a driver of the vehicle to see the view ahead of the vehicle following deployment of the air-bag.

In some embodiments the secondary chambers may not all be aligned with one another. In these embodiments it is important that the central plane of at least one of the secondary chambers is offset from the central plane of the perimeter chamber. In other embodiments, all of the secondary chambers are generally aligned with one another and share a common central plane.

It will be understood that embodiments of the present invention will provide passenger air-bags that afford a good level of protection to pedestrians, whilst requiring only relatively small amounts of gas to be inflated.

In the description above, reference is made to joining panels to one another by sewing. It should be understood that any other suitable joining method, such as gluing or welding, could also be used.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle with an air-bag mounted at a location near the front edge of the vehicle windscreen, the air-bag comprising:
an inflatable perimeter chamber (9, 17) which extends at least part of the way around a central region;
a plurality of substantially parallel secondary chambers (12, 22) provided substantially within the central region;
wherein a central plane (10) of the perimeter chamber (9, 17), which passes through the centre of the depth (11) of the perimeter chamber (9, 17), is offset from a central plane (13) of the at least one secondary chamber (12, 22), which passes generally through the centre of the depth (14) of the at least one secondary chamber (12, 22),
**characterised in that** the air-bag, when inflated, is positioned so that:
the perimeter chamber (9, 17) is arranged around the windscreen so that it overlies the hard structural elements around the windscreen, and
the secondary chambers (12, 22) overlie the main central portion of the windscreen, oriented such that the central plane (13) of the secondary chambers (12, 22) is on the outer side of the air-bag, spaced away from the windscreen.

2. A vehicle with an air-bag according to claim 1, wherein the perimeter chamber (9) extends substantially all of the way around the central region.

3. A vehicle with an air-bag according to claim 1, wherein the perimeter chamber (17) extends only part of the way around the central region,

4. A vehicle with an air-bag according to claim 3, wherein the perimeter chamber (17) has two free ends (21), and a flexible retaining element (20) is attached to, and extends between, the two free ends (21).

5. A vehicle with an air-bag according to claim 4, wherein at least one secondary chamber (22) is formed substantially parallel with the flexible retraining element (20), and the length of the at least one secondary chamber (22), when inflated, is greater than that of the flexible retaining element (20) so that the at least one secondary chamber (22) adopts a bowed configuration when the air-bag is inflated.

6. A vehicle with an air-bag according to claim 5, wherein at least part (23) of the central region is unobstructed when the air-bag is inflated.

7. A vehicle with an air-bag according to any preceding claim, wherein the distance between the central plane (12) of the perimeter chamber (9) and the central plane (13) of the at least one secondary chamber (12) is at least half of the depth (14) of the secondary chamber (12).

8. A vehicle with an air-bag according to claim 7, wherein the offset is at least as great as the depth (14) of the secondary chamber (12).

9. A vehicle with an air-bag according to any one of claims 1 to 6, wherein the offset is at least as great as half the depth (11) of the perimeter chamber (9).

10. A vehicle with an air-bag according to any preceding claim wherein the depth (11) of the perimeter chamber (9) is greater than the depth (14) of the at least one second chamber (12).

11. A vehicle with an air-bag according to claim 10, wherein the depth (11) of the perimeter chamber (9) is at least twice as great as the depth (14) of the secondary chamber (12).

12. A vehicle with an air-bag according to any preceding claim, wherein the air-bag is a pedestrian air-bag.

## Patentansprüche

1. Fahrzeug mit einem Airbag, der an einer Stelle nahe des vorderen Rands der Fahrzeug-Windschutzscheibe befestigt ist, wobei der Airbag umfasst:
eine aufblasbare Umfassungskammer (9, 17), die sich zumindest teilweise um einen zentralen Bereich herum erstreckt;
eine Mehrzahl von im Wesentlichen parallelen sekundären Kammern (12, 22), die im Wesentlichen innerhalb des zentralen Bereichs bereitgestellt sind;
wobei eine zentrale Ebene (10) der Umfassungskammer (9, 17), die durch das Zentrum der Tiefe (11) der Umfassungskammer (9, 17) verläuft, zu einer zentralen Ebene (13) der zumindest einen sekundären Kammer (12, 22) versetzt ist, die im Allgemeinen durch das Zentrum der Tiefe (14) der zumindest einen sekundären Kammer (12, 22) verläuft, **dadurch gekennzeichnet, dass** der Airbag, wenn er aufgeblasen ist, derart positioniert ist, dass:
die Umfassungskammer (9, 17) um die Windschutzscheibe herum angeordnet ist, so dass sie über den harten strukturellen Elementen um die Windschutzscheibe liegt, und
die sekundären Kammern (12, 22) über dem zentralen Hauptabschnitt der Windschutzscheibe liegen, derart orientiert, dass die zentrale Ebene (13) der sekundären Kammern (12, 22) auf der äußeren Seite des Airbags ist, beabstandet von der Windschutzscheibe.

2. Fahrzeug mit einem Airbag nach Anspruch 1, wobei sich die Umfassungskammer (9) im Wesentlichen vollständig um den zentralen Bereich herum erstreckt.

3. Fahrzeug mit einem Airbag nach Anspruch 1, wobei sich die Umfassungskammer (17) nur teilweise um den zentralen Bereich herum erstreckt.

4. Fahrzeug mit einem Airbag nach Anspruch 3, wobei die Umfassungskammer (17) zwei freie Enden (21) aufweist und ein flexibles Rückhalteelement (20) an den zwei freien Enden (21) angebracht ist und sich dazwischen erstreckt.

5. Fahrzeug mit einem Airbag nach Anspruch 4, wobei zumindest eine sekundäre Kammer (22) im Wesentlichen parallel zu dem flexiblen Rückhalteelement (20) gebildet ist, und die Länge der zumindest einen sekundären Kammer (22), wenn sie aufgeblasen ist, größer als jene des flexiblen Rückhalteelements (20) ist, so dass die zumindest eine sekundäre Kammer (22) eine gebogene Konfiguration annimmt, wenn der Airbag aufgeblasen ist.

6. Fahrzeug mit einem Airbag nach Anspruch 5, wobei zumindest ein Teil (23) des zentralen Bereichs unversperrt ist, wenn der Airbag aufgeblasen ist.

7. Fahrzeug mit einem Airbag nach einem voranstehenden Anspruch, wobei der Abstand zwischen der zentralen Ebene (12) der Umfassungskammer (9) und der zentralen Ebene (13) der zumindest einen sekundären Kammer (12) zumindest die Hälfte der Tiefe (14) der sekundären Kammer (12) ist.

8. Fahrzeug mit einem Airbag nach Anspruch 7, wobei der Versatz zumindest so groß wie die Tiefe (14) der sekundären Kammer (12) ist.

9. Fahrzeug mit einem Airbag nach einem der Ansprüche 1 bis 6, wobei der Versatz zumindest so groß wie die Hälfte der Tiefe (11) der Umfassungskammer (9) ist.

10. Fahrzeug mit einem Airbag nach einem voranstehenden Anspruch, wobei die Tiefe (11) der Umfassungskammer (9) größer als die Tiefe (14) der zumindest einen sekundären Kammer (12) ist.

11. Fahrzeug mit einem Airbag nach Anspruch 10, wobei die Tiefe (11) der Umfassungskammer (9) zumindest doppelt so groß wie die Tiefe (14) der sekundären Kammer (12) ist.

12. Fahrzeug mit einem Airbag nach einem voranstehenden Anspruch, wobei der Airbag ein Fußgänger-Airbag ist.

## Revendications

1. Véhicule pourvu d'un coussin gonflable monté à un emplacement proche du bord avant du pare-brise du véhicule, le coussin gonflable comprenant :
une chambre périmétrique gonflable (9, 17) qui s'étend au moins partiellement sur le pourtour d'une zone centrale ;
une pluralité de chambres secondaires (12, 22) sensiblement parallèles prévues sensiblement dans la zone centrale ;
dans lequel un plan central (10) de la chambre périmétrique (9, 17), qui passe par le centre de la profondeur (11) de la chambre périmétrique (9, 17), est décalé par rapport à un plan central (13) de l'au moins une chambre secondaire (12, 22), qui passe globalement par le centre de la profondeur (14) de l'au moins une chambre secondaire (12, 22), **caractérisé en ce que** le coussin gonflable, une fois gonflé,
est disposé de manière que :
la chambre périmétrique (9, 17) soit agencée autour du pare-brise afin de recouvrir les éléments structurels durs autour du pare-brise, et
les chambres secondaires (12, 22) recouvrent la partie centrale principale du pare-brise, avec une orientation telle que le plan central (13) des chambres secondaires (12, 22) se trouve sur le côté extérieur du coussin gonflable, à l'écart du pare-brise.

2. Véhicule pourvu d'un coussin gonflable selon la revendication 1, dans lequel la chambre périmétrique (9) s'étend sensiblement sur tout le pourtour de la zone centrale.

3. Véhicule pourvu d'un coussin gonflable selon la revendication 1, dans lequel la chambre périmétrique (17) s'étend uniquement sur une partie du pourtour de la zone centrale.

4. Véhicule pourvu d'un coussin gonflable selon la revendication 3, dans lequel la chambre périmétrique (17) présente deux extrémités libres (21) et dans lequel un élément de retenue souple (20) est rattaché aux deux extrémités libres (21) en s'étendant entre celles-ci.

5. Véhicule pourvu d'un coussin gonflable selon la revendication 4, dans lequel au moins une chambre secondaire (22) est formée de manière sensiblement parallèle à l'élément de retenue souple (20) et dans lequel la longueur de l'au moins une chambre secondaire (22), une fois gonflée, est supérieure à celle de l'élément de retenue souple (20), si bien que l'au moins une chambre secondaire (22) adopte une configuration arquée lorsque le coussin gonflable est gonflé.

6. Véhicule pourvu d'un coussin gonflable selon la revendication 5, dans lequel au moins une partie (23) de la zone centrale est dégagée lorsque le coussin gonflable est gonflé.

7. Véhicule pourvu d'un coussin gonflable selon l'une quelconque des revendications précédentes, dans lequel la distance entre le plan central (12) de la chambre périmétrique (9) et le plan central (13) de l'au moins une chambre secondaire (12) est au moins la moitié de la profondeur (14) de la chambre secondaire (12).

8. Véhicule pourvu d'un coussin gonflable selon la revendication 7, dans lequel le décalage correspond au moins à la profondeur (14) de la chambre secondaire (12).

9. Véhicule pourvu d'un coussin gonflable selon l'une quelconque des revendications 1 à 6, dans lequel le décalage correspond au moins à la moitié de la profondeur (11) de la chambre périmétrique (9).

10. Véhicule pourvu d'un coussin gonflable selon l'une quelconque des revendications précédentes, dans lequel la profondeur (11) de la chambre périmétrique (9) est supérieure à la profondeur (14) de l'au moins une chambre secondaire (12).

11. Véhicule pourvu d'un coussin gonflable selon la revendication 10, dans lequel la profondeur (11) de la chambre périmétrique (9) correspond à au moins deux fois la profondeur (14) de la chambre secondaire (12).

12. Véhicule pourvu d'un coussin gonflable selon l'une quelconque des revendications précédentes, dans lequel le coussin gonflable est un coussin gonflable pour piétons.
